Europäisches Patentamt

European Patent Office

Office européen des brevets

(19)

(11) Veröffentlichungsnummer: **0 052 071**
**B1**

(12) # EUROPÄISCHE PATENTSCHRIFT

(45) Veröffentlichungstag der Patentschrift:
27.03.85

(21) Anmeldenummer: 81810432.5

(22) Anmeldetag: 29.10.81

(51) Int. Cl.⁴: **G 03 D  15/00,** G 03 B  27/46

(54) Einrichtung zum Führen von endlichen Filmstreifen während ihres Transportes.

(30) Priorität: 07.11.80  CH 8283/80

(43) Veröffentlichungstag der Anmeldung:
19.05.82 Patentblatt 82/20

(45) Bekanntmachung des Hinweises auf die Patenterteilung:
27.03.85 Patentblatt 85/13

(84) Benannte Vertragsstaaten:
CH DE FR GB IT LI

(56) Entgegenhaltungen:
DE - A - 1 522 956
FR - A - 2 436 421
US - A - 4 098 634

(73) Patentinhaber: GRETAG Aktiengesellschaft,
Althardstrasse 70, CH-8105 Regensdorf (CH)

(72) Erfinder: Baschung, Michael, Bocklerstrasse 29,
CH-8051 Zürich (CH)

(74) Vertreter: Pirner, Wilhelm et al, Patentabteilung der
CIBA-GEIGY AG Postfach, CH-4002 Basel (CH)

## Beschreibung

Die Erfindung betrifft eine Einrichtung gemäß dem Oberbegriff des Patentanspruches 1 sowie eine Verwendung dieser Einrichtung.

Insbesondere bei der Verarbeitung von Foto-Filmstreifen, die bei der Nachbestellung von Kopien einzelner Bilder durch einen Kopierautomaten geführt werden, ist es üblich, die einzelnen Filmstreifen oder -abschnitte mit ihrer einen Längskante oder, sofern die Filmabschnitte mit einem seitlichen Nachbestellstreifen versehen sind, mit den freien Längskanten dieser Nachbestellstreifen an einem Trägerband zu befestigen, so daß sie seitlich von diesem abstehen. Die zu den verschiedenen Verarbeitungsstationen führende Transporteinrichtung greift dann am Trägerband an, so daß der Filmstreifen zumindest im Bereich der Bildfenster kaum oder gar nicht in Berührung mit Einrichtungsteilen gelangt. Es ist jedoch wesentlich, daß dieses »Verbundgebilde«, das im wesentlichen aus den gegebenenfalls mit Nachbestellstreifen versehenen Filmstreifen und dem Trägerband besteht, während des Transportes auch seitlich sehr genau geführt wird, damit eine exakte Positionierung beispielsweise an der Belichtungsstation gewährleistet ist.

Es ist eine Einrichtung der eingangs genannten Art bekannt, bei der die zweite, freie Längskante der Filmstreifen zur Führung der vom Trägerband abstehenden Längskanten der Filmstreifen dient, vgl. bspw. US-A-4 098 634. Diese vorbekannte Führungseinrichtung ergibt aus folgenden Gründen keine ausreichend genaue Seitenführung. Während zwar die Breitentoleranzen sowohl der Filmstreifen als auch des Trägerbandes als vernachlässigbar klein gelten können, ist nicht anzunehmen, daß beim Verbinden der Filmstreifen mit dem Trägerband, selbst wenn dies im Stoß erfolgt, ebenso enge Toleranzen eingehalten werden können, so daß sich die Breitentoleranz des gesamten »Verbundgebildes« erhöht und der Abstand der beiden Längsführungskanten sich nach der größten zu erwartenden Breite zu richten hat. Darüber hinaus bildet die Gesamtheit der vom Trägerband abstehenden Längskanten der Filmstreifen keine ununterbrochene Linie. Dies hat zur Folge, daß dort, wo die zugeordnete Längsführungskante der Einrichtung einen Unterbruch aufweist, die vorlaufende, freie Ecke eines Filmstreifens Gefahr läuft, an diesem Unterbruch hängen zu bleiben. Des weiteren sind die Filmstreifen nicht notwendigerweise ebene Gebilde. Es können Filmstreifen auftreten, die um eine zu ihrer Längsrichtung parallel Achse gewölbt sind, so daß dadurch die Gesamtbreite des »Verbundgebildes« verringert wird. Auch die zur Verarbeitung gelangenden Filmstreifen haben je nach Typ und Norm unterschiedliche Breiten, so daß die bekannte Einrichtung jeweils auf eine Filmbreite einzustellen ist und in dieser Einstellung nur Filmstreifen dieser Breite führen kann.

Bei einer weiteren bekannten Einrichtung wird die Seitenführung über das Trägerband allein gewährleistet, das zu diesem Zweck eine in Längsrichtung verlaufende Transport- und Führungsperforation (ähnlich wie bei einem Lochstreifen) aufweist, in welche die Stifte eines Stachelrades eingreifen. Auch diese Lösung vermag nicht vollständig zu befriedigen. Einerseits erfordert das Ineingriffbringen des Trägerbandes mit dem Stachelrad zusätzliche Arbeitsschritte und anderseits müßte insbesondere im Falle von mit Nachbestellstreifen versehenen Filmstreifen dann das Trägerband unerwünscht breit sein, damit die Perforation durch die Nachbestellstreifen und Klebebänder nicht abgedeckt wird. Ferner ist beim Aneinanderfügen von zwei Trägernbändern ganz besonders auf die von der Transport- und Führungsperforation gegebene Teilung zu achten. Schließlich sind die Kosten eines mit einer präzisen Transport- und Führungsperforation versehenen Trägerbandes nicht ohne weiteres vernachlässigbar.

Es ist daher als ein Zweck der Erfindung anzusehen, eine Einrichtung der eingangs genannten Art zu schaffen, die unter Vermeidung der genannten Nachteile der bekannten Einrichtungen eine bessere und zweckmäßigere Führung von solchen an einem Trägerband befestigten Filmstreifen ermöglicht.

Die erfindungsgemäße Einrichtung ist im Patentanspruch 1 beschrieben. Merkmale bevorzugter Ausführungsformen sind den abhängigen Patentansprüchen zu entnehmen.

Nachstehend ist die Erfindung rein beispielsweise anhand der Zeichnung näher beschrieben. Es zeigt

Fig. 1 in Draufsicht einen Ausschnitt aus einem mit sogeannten getabten Filmstreifen versehenen Trägerband,

Fig. 2 einen Schnitt etwa längs der Linie II-II der Fig. 1,

Fig. 3 einen schematischen Schnitt durch eine Führungseinrichtung für das in Fig. 1 und 2 gezeigte Gebilde, und

Fig. 4 einen schematischen Schnitt durch eine Ausführungsvariante der Fig. 3.

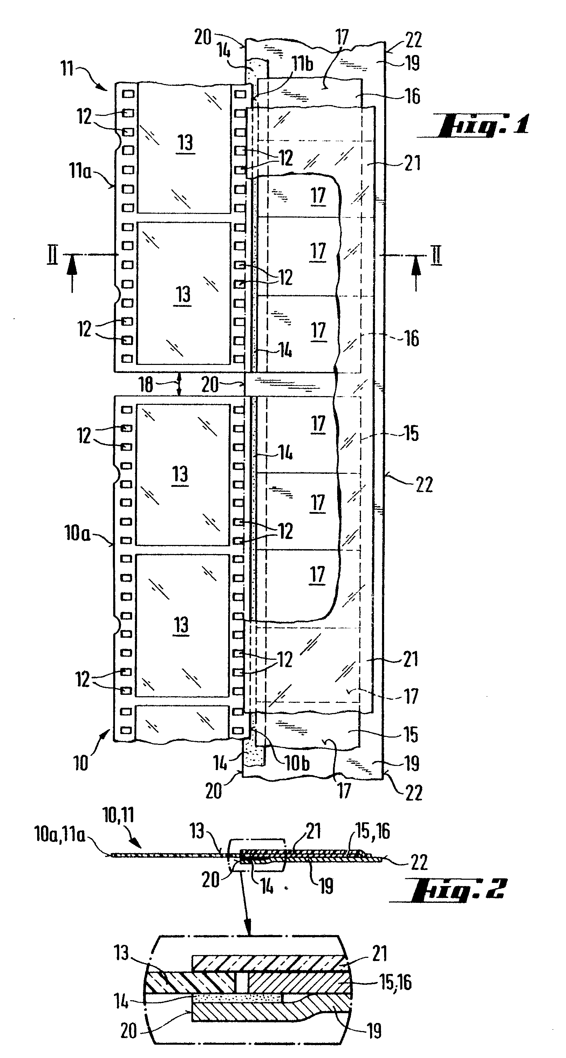

Zunächst sei auf die Fig. 1 und 2 verwiesen. In Fig. 1 sind Teile zweier Filmstreifen 10, 11 (hier beispielsweise eines sogenannten Kleinbildfilmes) zu erkennen, die an ihren beiden Längskanten die übliche Transportperforation 12 aufweisen. Die Bildfenster beider Filmstreifen 10, 11 sind mit 13 bezeichnet. An jedem der beiden Filmstreifen 10, 11 ist längs ihrer in Fig. 1 unten erscheinenden Längskante mittels eines schmalen, auf der dem Betrachter abgekehrten Seite erscheinenden Klebstreifens 14 ein Nachbestellstreifen oder Tab 15, 16 aus einem beschriftbaren Material angeklebt. In dieser Form werden in der Regel die von den Entwicklungsanstalten entwickelten Fotofilme dem Auftraggeber wieder ausgehändigt. Auf den Nachbestellstreifen 15, 16 sind nach den Bildfenstern 13 einigermaßen ausgerichtete Felder oder Rubriken 17 auf-

gedruckt, in denen der Auftraggeber seine Wünsche im Falle einer Nachbestellung (z. B. Anzahl und Format der gewünschten Kopien) angibt.

In diesem Zustand gelangen die Filmstreifen in die Kopieranstalt. Hier werden nun die Filmstreifen 10, 11 mit den angeklebten Nachbestellstreifen 15 bzw. 16 in einem Abstand 18 voneinander so auf ein Trägerband 19 gelegt, daß die Filmstreifen 10, 11 mit praktisch ihrer gesamten Breite über die Längskante 20 des Trägerbandes 19 vorstehen bzw. nur die Nachbestellstreifen 15, 16 auf dem Trägerband 19 aufliegen. Sodann werden die Filmstreifen 10, 11 über ihre Nachbestellstreifen 15 bzw. 16 mittels eines durchsichtigen, durchgehenden Klebebandes 21, das eine geringere Breite als das Trägerband 19 hat, auf diesem aufgeklebt. Das Trägerband 19 kann aus einem festen Papier sein, dessen Stärke einige wenige Zehntel mm beträgt. Zu beachten ist, daß die der Längskante 20 gegenüberliegende Längskante 22 des Trägerbandes 19 frei bleibt. Soweit der Aufbau des »Verbundgebildes«, das in seiner Längsrichtung mit einer möglichst präzisen Seitenführung zu transportieren ist, wozu die gemäß der Erfindung vorgeschlagene Einrichtung dient.

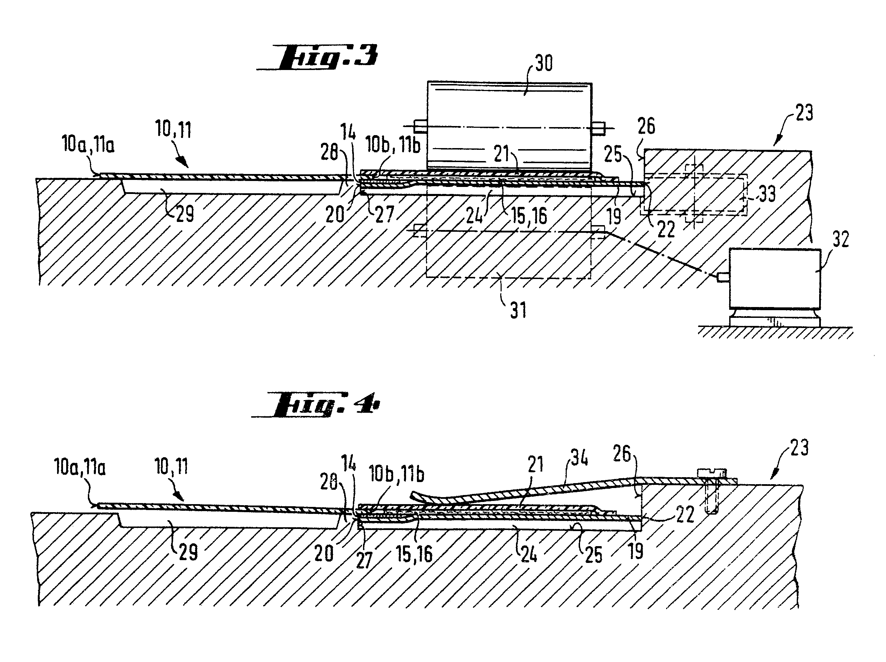

Dazu sei beispielsweise auf die Fig. 3 und 4 verwiesen, in denen einige der Bezugszeichen 10–22 der besseren Übersichtlichkeit wegen nicht wiederholt sind. Die seitliche Führung des zuvor erwähnten »Verbundgebildes« ist in den Fig. 3 und 4 durch eine in einem Block 23 eingearbeitete Längsnut 24 geringer Tiefe gegeben. Die Längsnut 24 ist auf der einen Seite durch eine erste, rechtwinklig von Nutenboden 25 abstehende Längsführungswand oder -kante 26 und auf der anderen Seite durch eine zweite, ebenfalls rechtwinklig vom Nutenboden 25 abstehende, aber nur wenige Zehntel mm hohe Längsführungskante 27 begrenzt. Die Breite der Nut 24, d. h. der Abstand zwischen den Längsführungskanten 26 und 27 entspricht der Breite des Trägerbandes 18. Dieses liegt somit mit seiner Längskante 22 an der Führungskante 26 und mit der Längskante 20 an der Führungskante 27 an. Die letztere bildet auch eine Seitenwand eines Steges 28, der die Nut 24 von einer zu dieser parallel laufenden Nut oder Vertiefung 29 trennt, die Gewähr dafür bietet, daß die über die Längskante 20 des Trägerbandes 19 vorstehenden Filmstreifen 10, 11 zumindest im Bereich der Bildfenster nicht auf der Unterlage schleifen.

Der Vorschubantrieb für das ganze »Verbundgebilde« kann durch ein reibschlüssig an das Trägerband 19 bzw. auf das Klebeband 21 angreifendes Paar von Antriebswalzen 30, 31 (in Fig. 3 gestrichelt angedeutet) erfolgen, von denen die eine (31) zum Beispiel an einen Schrittmotor 32 gekoppelt ist.

Zwischen der Längskante 22 des Trägerbandes und der ersten Längsführungskante 26 können in dieser Rollen, z. B. frei drehbare Kugellager 33 (Fig. 3) eingelassen sein, deren äußere Mantelfläche etwa tangential zur Ebene der Längsführungskante 26 verlaufen. Zur Kompensation von Trägerbandbreitenschwankungen können diese Rollen bzw. Kugellager eventuell auch geringfügig quer zur Transportrichtung federnd gelagert sein.

Um sicherzustellen, daß das Trägerband 19 nicht aus der ihm zugedachten Nut 24 herausspringt, können in regelmäßen Abständen in Transportrichtung, d. h. in der zur Zeichenebene rechtwinkligen Richtung, Niederhalter z. B. in Form von Blechen bzw. Blattfedern 34 oder dgl. vorgesehen sein. Wenn die Höhe der zweiten Längsführungskante 27 die Dicke des Trägerbandes 19 um ein geringes Maß überschreitet, dann haben die Niederhalter 34 darüber hinaus die vorteilhafte Wirkung, daß die Filmstreifen 10, 11 nach oben abgespreizt werden und damit sozusagen frei schwebend und doch präzise geführt transportiert werden.

Es versteht sich von selbst, daß im Zusammenhang mit der beschriebenen Einrichtung eine einzige Breite des Trägerbandes für alle vorkommenden Breiten von Filmstreifen zur Anwendung gelangt.

## Patentansprüche

1. Einrichtung zum Führen von endlichen Filmstreifen (10, 11) während deren Transportes, wobei die Filmstreifen im Abstand voneinander an einem Trägerband (19) befestigt sind und von diesem seitlich abstehen, mit einer ersten, mit der den Filmstreifen abgekehrten Seitenkante des Trägerbandes zusammenwirkenden Längsführungskante (26) und mit einer zweiten Längsführungskante (27), dadurch gekennzeichnet, daß die zweite Längsführungskante (27) räumlich so angeordnet ist, daß durch sie die andere Seitenkante (20) des Trägerbandes (19) geführt wird.

2. Einrichtung nach Patentanspruch 1, dadurch gekennzeichnet, daß die erste und die zweite Längsführungskante (26, 27) eine Nut (24) seitlich begrenzen, deren Tiefe gleich oder größer als die Dicke des Trägerbandes (19) ist.

3. Einrichtung nach Patentanspruch 2, dadurch gekennzeichnet, daß die zweite Längsführungskante (27) durch einen Steg (28) gebildet ist, der die genannte Nut (24) von einer weiteren parallel verlaufenden Nut (29) trennt.

4. Einrichtung nach Patentanspruch 1, dadurch gekennzeichnet, daß in der ersten Längsführungskante (26) frei drehbare Rollen (33) eingelassen sind, deren Mantelfläche praktisch tangential zur ersten Längsführungskante (26) verläuft.

5. Einrichtung nach den Patentansprüchen 2 und 3, dadurch gekennzeichnet, daß ein Niederhalter (34) vorgesehen ist, der das Trägerband (19) in der genannten Nut (24) niederhält.

6. Einrichtung nach Patentanspruch 5, dadurch gekennzeichnet, daß der Niederhalter durch eine Blattfeder (34) gebildet ist.

7. Einrichtung nach Patentanspruch 5, dadurch gekennzeichnet, daß der Niederhalter durch

eine Rolle gebildet ist.

8. Verwendung der Einrichtung gemäß Patentanspruch 1 in einer Anlage zur Herstellung von Kopien ab Filmstreifen.

## Claims

1. Apparatus for guiding finite film strips (10, 11) during their coneyance, wherein the film strips are attached spaced apart from each other on a carrier strap (19) and project laterally from said strap, having a first longitudinal guiding edge (26) cooperating with the lateral edge of the carrier strap (19) opposite the film strip and having a second longitudinal guide edge (27), characterized in that the second longitudinal guiding edge (27) is so spatially arranged as to guide the other lateral edge (20) of the carrier strap (19).

2. Apparatus according to claim 1, characterized in that the first and second longitudinal guiding edges (26, 27) define lateral boundaries for a groove (24), the depth whereof being equal to or greater than the thickness of the carrier strap (19).

3. Apparatus according to claim 2, characterized in that the second longitudinal guiding edge (27) is formed by a ridge (28) separating said groove (24) from an additional groove (29) extending parallel to said groove.

4. Apparatus according to claim 1, characterized in that a plurality of free rotating rollers (33) is mounted inside the first longitudinal guiding edge (26), the circumferential surface whereof being substantially tangent to the first longitudinal guiding edge (26).

5. Apparatus according to claims 2 and 3, characterized in that retaining means (34) are provided for retaining the carrier strap (19) in said groove (24).

6. Apparatus according to claim 5, characterized in that the retaining means comprise a blade spring (34).

7. Apparatus according to claim 5, characterized in that the retaining means comprise a roller.

8. Use of the apparatus according to claim 1 in a plant for producing copies from a film strip.

## Revendications

1. Dispositif pour le guidage de bandes de film (10, 11) de longueur limitée pendant leur transport, les bandes de film étant fixées à distance l'une de l'autre sur un ruban porteur (19) et faisant saillie latéralement de celui-ci, dispositif comportant un premier bord de guidage longitudinal (26) coopérant avec le bord latéral, opposé aux bandes de film, du ruban porteur ainsi qu'un second bord de guidage longitudinal (27), et étant caractérisé en ce que le second bord de guidage longitudinal (27) est disposé dans l'espace de telle sorte que l'autre bord latéral (20) du ruban porteur (19) soit guidé par lui.

2. Dispositif selon la revendication 1, caractérisé en ce que le premier et le second bord de guidage longitudinal (26, 27) délimitent latéralement une rainure (24) dont la profondeur est égale ou supérieure à l'épaisseur du ruban porteur (19).

3. Dispositif selon la revendication 2, caractérisé en ce que le second bord de guidage longitudinal (27) est constitué par une nervure (28) qui sépare la rainure précitée (24) d'une autre rainure (29) orientée parallèlement.

4. Dispositif selon la revendication 1, caractérisé en ce que dans le premier bord de guidage longitudinal (26) sont engagés des rouleaux fous (33), dont la surface périphérique est orientée pratiquement tangentiellement au premier bord de guidage longitudinal (26).

5. Dispositif selon les revendications 2 et 3, caractérisé en ce qu'il est prévu un organe d'appui (34) qui soutient le ruban porteur (19) dans la rainure précitée (24).

6. Dispositif selon la revendication 5, caractérisé en ce que l'organe d'appui est constitué par une lame élastique (34).

7. Dispositif selon la revendication 5, caractérisé en ce que l'organe d'appui est constitué par un rouleau.

8. Utilisation du dispositif conforme à la revendication 1 dans une installation pour la fabrication de copies ou tirages d'épreuves à partir d'une bande de film.

0 052 071

Fig. 1

Fig. 2

## Fig. 3

10a,11a   10,11   28 14   10b,11b   30   26   25   23   33   22   32   21   29   20   27   24   15,16   19   31

## Fig. 4

10a,11a   10,11   28 14   10b,11b   21   34   26   23   22   19   29   20   27   15,16   24   25

0 052 071